# EUROPEAN PATENT APPLICATION

(11) **EP 1 801 084 A1**
(43) Date of publication of application: **27.06.2007**
(21) Application number: 05466022.0
(22) Date of filing: 20.12.2005
(51) Int. Cl.: C04B 28/00, C04B 18/08

(54) **Fly-ash concrete compositon, method of preparation by geo-polymeric reaction of activated fly-ash and its use.**

(71) Applicant: Svoboda, Pavel, 149 00 Praha 4 (CZ); Skvara, Frantisek, 170 00 Praha 7 (CZ); Dolezal, Josef, 169 00 Praha 6 (CZ); Dvoracek, Kamil, 281 29 Zizelice nad Cidlinou (CZ); Lucuk, Kamil, 739 51 Dobra u Fridku Mistku (CZ)
(72) Inventor: Svoboda, Pavel, 149 00 Praha 4 (CZ); Skvara, Frantisek, 170 00 Praha 7 (CZ); Dolezal, Josef, 169 00 Praha 6 (CZ); Dvoracek, Kamil, 281 29 Zizelice nad Cidlinou (CZ); Lucuk, Kamil, 739 51 Dobra u Fridku Mistku (CZ)
(74) Representative: Danek, Vilem

(57) **Abstract**

Fly-ash concrete, its composition, method of preparation of fly-ash activated by geo-polymeric reaction, and its use, when the synthesis of geo-polymers takes place by alkaline activation of fly-ash mixture at a temperature from 40° C to 80° C, preferably by alkaline activation with Na₂SiO₃ water glass solution in an amount of 6 -12% of dry mass on weight of fly-ash and sodium hydroxide NaOH in amount of preferably 4 - 8% of dry mass on weight of fly-ash.
For improving the consistency of the fly-ash concrete it is possible to add water up to total water-cement ratio water in solutions + added water ∑v/pop = w 0.45 up to 0.6.
By the amount of fly-ash regarding to aggregate, it is possible to regulate not only the consistency of fresh fly-ash concrete, but also its final solidity and resistance to aggressive environments.

## Description

### FIELD OF INVENTION

This invention relates to fly-ash concrete (named ASHCONCRETE), its material composition with flying ashes as a binder, method of its preparation and use.

### BACKGROUND OF INVENTION

Latent hydraulic active materials, as granulated blast-furnace slag, electrical industry fly-ash, natural or artificial pozzolanas, are components of mixture Portland cements. These materials are actively participating in the process of Portland cements hydration, activating material being mainly Ca(OH)₂, which comes from hydration of clinker minerals. Hydraulic active materials are also able to create hydrates providing substances with measurable mechanical characteristics, even when Ca(OH)₂ is not present. Some alkaline adducts like Na₂CO₃, NaOH or Na₂SiO₃ are such activators of latent hydraulic active materials.

Basic data of these binders, slag-alkaline cements, are to be find in literature, e.g. in V. D. Gluchovskij: "Soil Silicates", Kijev 1959, or in Proceedings 1. a 2. International Conference "Alkaline Cements and Concretes", Kijev 1994, 1999, and others. There are mixtures of latent hydraulic active materials (namely slag and others) described in this literature, where alkaline activator in the form of water glass, Na₂CO₃ and NaOH.

Number of authors (eg. Davidovits J.: "Properties of geopolymer cements", Proc. 1st Intern.Conf. "Alkaline cements and concretes", vol.1., p.131-150, VIPOL Stock Comp. Kiev 1994, Davidovits J.: "Geopolymers - inorganic polymeric new materials", J. Therm. Anal. 37, p. 1633-1656, 1991, Davidovits J.: "Chemistry of geopolymeric systems, terminology", Proc. Geopolymer Inter.Conf. (1999), Van Jaarsveld J.G.S, Van Deventer J.S.J., Lorenzen L.: The potential use of geoplymeric materials to immobilise toxic materials", Part I., Miner. Eng. 10, 659-669 (1997), , Part II ,12, 75-91(1999)) suspect that the most important agent in alkaline activation of latent hydraulic materials is the Si/A1 rate, respectively the concentration of alkali or the SiO₂/Na₂O rate.

The biggest production unit in building practice is a concrete of cement. It is a natural worked, stamped or even artificial aggregate of specified granularity fractions, composed, according to its purpose, to continuous or discontinuous mutual succession - grading curve, so that it reaches the most reachable volume weight in settled status, which is the crucial phenomenon of the title "concrete".

Binding unit here is formed by silicate binder - cement - which in conjunction with water hydrates and changes into cement stone. This originally heterogeneous mixture of aggregate, cement and water, being of soft to plastic character, provides building material of relatively high solidity, approaching some kinds of natural stones, after indurations. This allows forming various shapes, e.g. building units and constructions.

Furthermore, a large variety of components of purposefully aggregate granularity with various main binding agents is known, and they correctly take over the title of concrete, e.g. asphalts (asphalt-concrete), epoxies (epoxy-concrete), sulfurs (sulfur-concrete), brick-clays (brick-clay-concrete), etc. The title is derived from the main binding agent in all these cases.

Substantial characteristic of all these concretes is the method of mixing all components in liquid to plastic status, their forming to desired shape or proportions by casting, vibratory, gravity, tonic or pressing compaction to the highest reachable volume weight and following hardening of the binding unit to gain firm material of desired shape, solidity and certain endurance.

General expansion of cement-concrete namely in building activities narrowed the general title used or over the world down to "concrete" (beton, 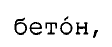 etc.) According to its characteristics various attributes are being amended to this title, specifying its composition or resulting qualities of cement concretes, e.g. steel concrete, wire concrete, fiber concrete, foam concrete, gas concrete, slag concrete, fly-ash concrete, etc.

The title "fly-ash concrete" is often being used recently, where in small percentage the fly-ash from large furnaces of coal incinerations is added as inert unit to the said mixture of aggregate and cement, thus cement concrete, with the aim of filling the missing units of fine aggregate to improve the surface characteristics of this cement concrete.

The title fly-ash concrete thus characterizes cement concrete with fly-ash ingredient, where the main unit for agglutination of specified aggregate is composed of hydraulic binder cement (cement concrete) and fly-ash is only an inert ingredient added in small portion compared to the weight of cement.

### SUMMARY OF INVENTION

Compositions of concrete, given below, which are objects of present invention, can be obtained by complete absence of cement in the concrete having a binding agent based on geo-polymeric reaction of fly-ash, for example in incineration of coal. Regarding to distinctively different composition of concrete, according to present invention, compared to known titles, hereinafter the new title ASHCONCRETE will be used. The synthesis of geo-polymers takes place by alkaline activation of mixture of fly-ash with temperature from 40° C to 80° C, preferably by alkaline activator of water glass Na₂SiO₃ solution in amount from 6 to 12% of dry mass to the weight of fly-ash.

For improving the consistency of ASHCONCRETE it is possible to add water up to total water-cement ratio water in solutions + added water Σv/pop = w 0.45. The period of the clearance fit after immixture of ASHCONCRETE and following thermal activation has positive effect on solidity. By the amount of fly-ash regarding to aggregate, it is possible to regulate not only the consistency of fresh ASHCONCRETE, but also its final solidity and resistance to aggressive environment.

ASHCONCRETE according to present invention is mostly composed of natural fine worked aggregate, fine aggregate and worked stone, eventually fine worked aggregate and crushed stone. In case of special concrete, the aggregate units partially or totally substituted by artificial aggregate. This mixture can be supplied by milled ingredient of inert agent or other active unit in percentage specified to the basic amount of fly-ash.

ASHCONCRETE according to this invention is characterized, besides solidity, by high adhesion especially to steel and many other materials.

### DISCLOSURE OF PREFERRED EMBODIMENT

### Example 1

Into the mixture of ASHCONCRETE containing 64.0% of aggregate of granularity from 0.0 to 22.0 mm and 26.0% of fly-ash, in weight percentage, 5.26% of water glass solution in concentration of 43.10% of dry mass and 3.53% of sodium hydroxide solution in concentration of 43.5% of dry mass was added, and the mixture was filled with 1.21 weight percent of water after the immixture.

From this prepared and mixed mixture of fresh ASHCONCRETE pilot solids were made, processed by vibration, freely left in background of 20° C temperature for the period of 24 hours and subsequently stored to 80° C temperature for 24 hours. Reached solidities after pilot solids temperature over 40MPa show only small increase and are comparable to solidity of cement concrete of similar composition 28 days old.

### Example 2

Into the mixture of ASHCONCRETE containing 64.0% of aggregate of granularity from 0.0 to 22.0 mm and 26.0% of fly-ash, in weight percentage, 5.26% of water glass solution in concentration of 43.10% of dry mass and 3.53% of sodium hydroxide solution in concentration of 43.5% of dry mass was added, and the mixture was filled with 1.21 weight percent of water after the immixture.

From this prepared and mixed mixture of fresh ASHCONCRETE pilot solids were made, processed by vibration, freely left in background of 20° C temperature for the period of 30 hours and subsequently stored to 60° C temperature for 24hours. Reached solidities after pilot solids temperature over 40MPa show only small increase and are comparable to solidity of cement concrete of similar composition 28 days old.

### Example 3

Into the mixture of fine-grained ASHCONCRETE containing 80.0% of aggregate of granularity from 0.0 to 4.0 mm and 14.0% of fly-ash, in weight percentage, 2.83% of water glass solution in concentration of 43.10% of dry mass and 3.53% of sodium hydroxide solution in concentration of 43.5% of dry mass was added, and the mixture was filled with 1.26 weight percent of water after the immixture.

From this prepared and mixed mixture of fresh fine-grained ASHCONCRETE pilot solids were made, processed by vibration, freely left in background of 20°C temperature for the period of 24 hours and subsequently stored to 80°C temperature for 24 hours. Reached solidities after pilot solids temperature over 30MPa show only small increase and are comparable to solidity of cement concrete of similar composition 28 days old.

### Example 4

Into the mixture of ASHCONCRETE containing 64.0% of aggregate of granularity from 0.0 to 22.0 mm, 20.0% of fly-ash, and 6.0% of milled blast furnace slag, in weight percentage, 5.26% of water glass solution in concentration of 43.10% of dry mass and 3.53% of sodium hydroxide solution in concentration of 43.5% of dry mass was added, and the mixture was filled with 1.21 weight percent of water after the immixture.

From this prepared and mixed mixture of fresh ASHCONCRETE pilot solids were made, processed by vibration, freely left in background of 20° C temperature for the period of 24 hours and subsequently stored to 80° C temperature for 24 hours. Reached solidities after pilot solids temperature over 50MPa show only small increase and are comparable to solidity of cement concrete of similar composition 28 days old.

### Example 5

Into the mixture of ASHCONCRETE containing 64.0% of aggregate of granularity from 0.0 to 22.0 mm, 20.0% of fly-ash, and 6.0% of clear bentonite, in weight percentage, 5.26% of water glass solution in concentration of 43.10% of dry mass and 3.53% of sodium hydroxide solution in concentration of 43.5% of dry mass was added, and the mixture was filled with 1.21 weight percent of water after the immixture.

From this prepared and mixed mixture of fresh ASHCONCRETE pilot solids were made, processed by vibration, freely left in background of 20° C temperature for the period of 24 hours and subsequently stored to 80° C temperature for 24 hours. Reached solidities after pilot solids temperature over 30MPa show only small increase and are comparable to solidity of high quality cement concrete of similar composition 28 days old.

### Example 6

Into the mixture of ASHCONCRETE containing 64.0% of aggregate of granularity from 0.0 to 22.0 mm, 20.0% of fly-ash, and 6.0% of sodafied bentonite (soda-bentonite), in weight percentage, 5.26% of water glass solution in concentration of 43.10% of dry mass and 3.53% of sodium hydroxide solution in concentration of 43.5% of dry mass was added, and the mixture was filled with 1.21 weight percent of water after the immixture.

From this prepared and mixed mixture of fresh ASHCONCRETE pilot solids were made, processed by vibration, freely left in background of 20° C temperature for the period of 24 hours and subsequently stored to 80° C temperature for 24 hours. Reached solidities after pilot solids temperature over 35MPa show only small increase and are comparable to solidity of high quality cement concrete of similar composition 28 days old.

### Example 7

Into the mixture of ASHCONCRETE containing 64.0% of aggregate of granularity from 0.0 to 22.0 mm, 20.0% of fly-ash, and 6.0% of milled silica sand (SUK), in weight percentage, 5.26% of water glass solution in concentration of 43.10% of dry mass and 3.53% of sodium hydroxide solution in concentration of 43.5% of dry mass was added, and the mixture was filled with 1.21 weight percent of water after the immixture.

From this prepared and mixed mixture of fresh ASHCONCRETE pilot solids were made, processed by vibration, freely left in background of 20° C temperature for the period of 24 hours and subsequently stored to 80° C temperature for 24 hours. Reached solidities after pilot solids temperature over 40MPa show only small increase and are comparable to solidity of high quality cement concrete of similar composition 28 days old.

### Example 8

Into the mixture of ASHCONCRETE containing 64.0% of aggregate of granularity from 0.0 to 22.0 mm, 20.0% of fly-ash, and 6.0% of milled blast furnace slag, in weight percentage, 5.26% of water glass solution in concentration of 43.10% of dry mass and 3.53% of sodium hydroxide solution in concentration of 43.5% of dry mass was added, and the mixture was filled with 1.21 weight percent of water after the immixture.

From this prepared and mixed mixture of fresh ASHCONCRETE pilot solids were made, processed by vibration, freely left in background of 20° C temperature for the period of 24 hours and subsequently stored to 40° C temperature for 48 hours. Reached solidities after pilot solids temperature over 50MPa show only small increase and are comparable to solidity of high quality cement concrete of similar composition 28 days old.

### Example 9

Into the mixture of ASHCONCRETE containing 64.0% of aggregate of granularity from 0.0 to 22.0 mm, 20.0% of fly-ash, and 6.0% of milled blast furnace slag, in weight percentage, 5.26% of water glass solution in concentration of 43.10% of dry mass and 3.53% of sodium hydroxide solution in concentration of 43.5% of dry mass was added, and the mixture was filled with 1.21 weight percent of water after the immixture.

From this prepared and mixed mixture of fresh ASHCONCRETE pilot solids were made, processed by vibration, freely left in background of 20° C temperature for the period of 24 hours and subsequently stored to 40° C temperature for 48 hours and subsequently stored in water bath for 20 days. Reached solidities after pilot solids temperature over 60MPa showed increase in following days and are comparable to solidity of high quality cement concrete of similar composition 28 days old.

### Example 10

Into the mixture of ASHCONCRETE containing 64.0% of aggregate of granularity from 0.0 to 22.0 mm and 26.0% of fly-ash, in weight percentage, 5.26% of water glass solution in concentration of 43.10% of dry mass and 3.53% of sodium hydroxide solution in concentration of 43.5% of dry mass was added, and the mixture was filled with 1.21 weight percent of water after the immixture.

From this prepared and mixed mixture of fresh ASHCONCRETE pilot solids were made by free casting, freely left in background of 20° C temperature for the period of 24 hours and subsequently stored to 80° C temperature for 24 hours. Reached solidities after pilot solids temperature over 35MPa show only small increase and are comparable to solidity of high quality cement concrete of similar composition 28 days old.

### Example 11

Into the mixture of ASHCONCRETE containing 64.0% of aggregate of granularity from 0.0 to 22.0 mm, 20.0% of fly-ash, and 6.0% of milled blast furnace slag, in weight percentage, 5.26% of water glass solution in concentration of 43.10% of dry mass and 3.53% of sodium hydroxide solution in concentration of 43.5% of dry mass was added, and the mixture was filled with 1.21 weight percent of water after the immixture.

From this prepared and mixed mixture of fresh ASHCONCRETE pilot solids were made by free mold casting, freely left in background of 20° C temperature for the period of 24 hours and subsequently stored to 80° C temperature for 24 hours. Reached solidities after pilot solids temperature over 50MPa show small increase in following days and are comparable to solidity of high quality cement concrete of similar composition 28 days old.

### Example 12

Into the mixture of ASHCONCRETE containing 64.0% of aggregate of granularity from 0.0 to 22.0 mm, 20.0% of fly-ash, and 6.0% of milled blast furnace slag, in weight percentage, 5.26% of water glass solution in concentration of 43.10% of dry mass and 3.53% of sodium hydroxide solution in concentration of 43.5% of dry mass was added, and the mixture was filled with 1.21 weight percent of water after the immixture.

From this prepared and mixed mixture of fresh ASHCONCRETE pilot solids were made by free mold casting, freely left in background of 20° C temperature for the period of 24 hours and subsequently stored to 80° C temperature for 24 hours and subsequently stored in water bath for 20 days. Reached solidities after pilot solids temperature over 50MPa show increase after 28 following days to 65MPa and are comparable to solidity of high quality cement concrete of similar composition.

### Example 13

Into the mixture of ASHCONCRETE containing 64.0% of aggregate of granularity from 0.0 to 22.0 mm, 20.0% of fly-ash, and 6.0% of milled calcite, in weight percentage, 5.26% of water glass solution in concentration of 43.10% of dry mass and 3.53% of sodium hydroxide solution in concentration of 43.5% of dry mass was added, and the mixture was filled with 1.21 weight percent of water after the immixture.

From this prepared and mixed mixture of fresh ASHCONCRETE pilot solids were made, processed by vibration, freely left in background of 20° C temperature for the period of 24 hours and subsequently stored to 80° C temperature for 24 hours. Reached solidities after pilot solids temperature over 40MPa showed small increase in following days and are comparable to solidity of high quality cement concrete of similar composition 28 days old.

### Industrial utilization of the invention

Industrial utilization of ASHCONCRETE is in accordance with mass utilization of classical concrete mixtures. Advantageously for ASHCONCRETE e.g. piecing materials for ferro-concrete construction sanitation, piecing materials for foundation masonry, ceramic, mixed or stone, outdoor tiles, chemically resistant outdoor and indoor tiles, chemically resistant adapting pieces for industry, prefabricated element fortified with mild steel, composite for working with dangerous substances (heavy metal, radioactive matters, etc.), which ensures their non-leachment, fillings for transmissions of ferro-concrete constructions, connections of ferro-concrete constructions fillers, matrixes for casting of liquid metals, heat-resistant products, etc. With the method according to present invention, it is possible to produce various building components and pieces namely in prefabrication or on building site and in places allowing temperature of fly-ash concrete in differentiated period of time by heating from 40° C to 80° C, according to volume of the unit. With the composition of ASHCONCRETE according to present invention, it is possible to produce building components of high solidity and resistance, namely to aggressive background.

## Claims

1. Fly-ash concrete titled "ASHCONCRETE" with total absence of cement, **characterized by** binding agent composed of fly-ash based on geo-polymeric reaction, where the synthesis of geo-polymers is realize by alkaline activation of fly-ash mixture in temperature from 20° C to 99° C; preferably from 40° C to80° C, by alkaline activator of water glass Na₂SiO₃ solution in amount 1 - 25% of dry mass; preferably 6 -12% of dry mass on fly-ash weight, and sodium hydroxide NaOH in amount 2 - 20% of dry mass on fly-ash weight; preferably 4 -8% of dry mass on fly-ash weight.

2. Fly-ash concrete of claim 1, **characterized by** the fact, that water can be added to improve the ASHCONCRETE consistence.

3. Fly-ash concrete of claim 2, **characterized by** that water can be added up to total water-cement ratio water in solutions + added water Σv/pop = w 0.45, in special cases up to 0.6.

4. Fly-ash concrete of claim 1, **characterized by** the fact, that by the ratio of fly-ash regarding to aggregate, it is possible to regulate the consistency of fresh ASHCONCRETE, and also its increasing final solidity and/or resistance to aggressive environment.

5. Fly-ash concrete of claims 1 - 3 **characterized by** showing high adhesion to metals suitable for fortifying of products by steel wires or wands, similarly to cement concrete.

6. Method of preparation of fly-ash concrete titled "ASHCONCRETE" with total absence of cement, composed of mixture of natural or artificial aggregate of various granularity, **characterized by** utilizing a binder, which is based on geo-polymeric reaction of fly-ash, where the aggregate is weight-set up in the way showing the highest reachable volume weight in settled status, than further adding fly-ash of measurable surface from 100 to 600 m²/kg, alkaline activator with SiO₂/Na₂O rate from 0.8 to 2.0, which is composed of the mixture of alkaline hydroxides and silicate or alkaline water glass and water, where the composition of ASHCONCRETE after intensive mixing, formed by casting or vibration, is further temperated with temperature from 20° C to 70° C in period of time from 12 to 48 hours, eventually further temperated with temperature from 71 to 90° C for period of 6-24 hours, inner warming by electrical warmer or warming by steel fortifier can also be used for temperation of the product.

7. Method of preparation of ASHCONCRETE of claims 1 - 6 **characterized by** adding active ingredients during the mixing of ASHCONCRETE, advantageously milled blast furnace slag, or substances of clay characters, thermally activated clays, metakaolinite, etc.

8. Method of preparation of ASHCONCRETE of claims 1 - 7 **characterized by** adding inert ingredients during the mixing of ASHCONCRETE, advantageously milled calcite, milled flint, stone dust, or other inert ingredients.

9. Method of preparation of ASHCONCRETE of claims 7 and 8 **characterized by** active or inert ingredients showing characteristics of measurable surface from 200 to 600 m²/kg, corresponding amount 10-30% of fly-ash weight.

10. Method of preparation of ASHCONCRETE of claims 1 - 9 **characterized by** that after the temperation of ASHCONCRETE the product is further preferably left in water bath and or wet background with relative humidity 100% for the period of time from 7 to 30 days.

11. Method of preparation of ASHCONCRETE of claims 1 - 9 **characterized by** possibility of adding fortifying ingredients during the mixing of ASHCONCRETE, such as steel wires, glass or polypropylene fibers, etc.

12. Method of preparation of ASHCONCRETE of claims 1 - 11 **characterized by** the possibility of temperating of large building units or pieces using electrical warming of steel fortifier with electric tension from 24 to 220 V, preferably 42 V inside the final product, alternatively by inserting subsidiary conductors into the product in the process allowing uniform warming trough whole extent of final product inside as well as on its surface.
